# EUROPEAN PATENT SPECIFICATION

(11) **EP 0 667 260 B1**
(45) Date of publication and mention of the grant of the patent: **02.04.1997**
(21) Application number: 94118711.4
(22) Date of filing: 28.11.1994
(51) Int. Cl.: B60R 7/02

(54) **Vehicle cargo organizer**
Raumteiler für Kraftfahrzeuge
Dispositif de compartimentage pour véhicules

(30) Priority: 12.01.1994 US 200870
(43) Date of publication of application: 16.08.1995
(73) Proprietor: Mascotech Automotive Systems Group, Inc., Auburn Hills, Michigan 48326 (US)
(72) Inventor: Malinowski, Leo, Detroit, Michigan 48206 (US); Evans, Terrance R., Clarkston, Michigan 48346 (US)
(74) Representative: Schwan, Gerhard, Dipl.-Ing.

(56) References cited:
- WO-A-88/08379
- DE-A- 1 480 329
- DE-A- 3 839 260
- GB-A- 2 267 876
- US-A- 4 540 213
- US-A- 4 718 584

## Description

### Background Of The Invention

### I. Field of the Invention

This invention relates to a cargo container or organizer for a vehicle and, in particular, to an organizer which is stored in a flat position forming a load floor and which can be readily folded upwardly to create divided cargo sections within a cargo area of the vehicle to prevent spillage. Such a cargo container as defined by the features of the preamble of claim 1 is known from WO-A-88108379.

### II. Description of the Prior Art

The organization or maintenance of cargo within a cargo area of a motor vehicle has become an increasingly important feature for vehicle owners. This is particularly true with the increased popularity of utility vehicles which include large flat areas of cargo storage. In vehicles with trunks the tendency for cargo to move around is lessened although cargo retainers can be desirable.

Early cargo organizers or retainers included cargo nets which could be stretched from one side of the cargo area to the other to create a patent for the cargo. Typically, the net utilizes a wall of the cargo area to positionally capture the cargo. Although useful for packages of limited sizes, the cargo nets cannot retain large packages particularly items having a rectangular configuration. Moreover, the resilient nature of the cargo net allows the cargo some movement which can cause damage or spillage.

More rigid organizers have been employed which compartmentalize the cargo area. Such assemblies typically depend upon rigid walls. In order to increase the storage area or during non-use, these rigid walls may fold downwardly to the floor of the cargo area or outwardly to the side walls. In either case, the folded organizer takes up considerable space which may be needed in certain circumstances. In such situations, the organizer may need to be removed causing the user the problem of storage of the organizer. Additionally, because of the various layers created by the folded organizer a truly flat load surface may not be possible.

Still other organizers are exceedingly complicated and therefore expensive. Although consumers view such organizers as a useful feature, they are not willing to pay more than a nominal amount for such conveniences. Thus, such organizers must be cost effective, simple and compact for any practical application in modern motor vehicles.

### Summary Of The Present Invention

The present invention overcomes the disadvantages of the prior known cargo organizers by providing a simple organizer which can be stored in a flat position maximizing cargo area yet easily folds upwardly to compartmentalize the cargo area. The cargo organizer of the present invention as defined by the features of claim 1 is adapted to be easily removed for cleaning yet does not intrude within the cargo space while collapsed flat against the cargo floor.

The cargo organizer of the present invention forms a flat load surface when in the lowered position. The organizer includes a frame which defines the cargo area and folding inner panel hingedly connected to the frame for selectively maintaining the frame in a raised position. Dividers are provided compartmentalizing the organizer. In a preferred embodiment, the inner panel is cut-out of the frame along three edges thereby forming a living hinge along the remaining edge. The inner panel is longitudinally scored forming a living hinge along the panel such that the frame can be propped up by the inner panel. The inner panel folds to form a back wall for the organizer. A forward edge of the frame is hingedly connected directly to the load floor such that upon set up the frame is disposed at an angle extending from the load floor to the top of the supporting inner panel.

In an alternative embodiment, the load floor incorporates a living hinge allowing a portion to be folded upwardly to form the vertical wall of the organizer. A plurality of dividers can be folded outwardly to not only compartmentalize the organizer but also to prop up the hinged wall.

The vehicle cargo organizer includes additional features to facilitate retention of packages. A hook is cut out of the planar organizer such that upon set up means are provided for hooking the handles of plastic grocery bags or the like. Because of the cut out form of the back support and the hanger hooks, upon folding down the organizer a flat load surface is created.

Other objects, features and advantages of the invention will be apparent from the following detailed description taken in connection with the accompanying drawings.

### Brief Description Of The Drawing

The present invention will be more fully understood by reference to the following detailed description of a preferred embodiment of the present invention when read in conjunction with the accompanying drawing in which like reference characters refer to like parts throughout the view and in which:
FIGURE 1 is a perspective view of a cargo organizer for a vehicle embodying the present invention, the organizer stored in the collapsed position;
FIGURE 2 is a perspective view of the cargo organizer in the raised position;
FIGURE 3 is a perspective view of an alternative arrangement of the cargo organizer;
FIGURE 4 is a perspective view of an embodiment of the cargo organizer being not part of the present invention;
FIGURE 5 is an enlarged view of the retainer hookup shown in circle 5 of Fig. 2;
FIGURE 6 is an alternative embodiment of the retainer hook-up; and
FIGURE 7 is an enlarged view of the package hook in circle 7 of Fig. 2;
FIGURE 8 is a perspective view of a still further embodiment of the cargo organizer folded down against the load floor;
FIGURE 9 is a perspective view of the cargo organizer in the raised position with cargo stored therein; and
FIGURE 10 is a perspective view of the cargo organizer retaining cargo within and proximate to the organizer.

### Detailed Description Of A Preferred Embodiment Of The Present Invention

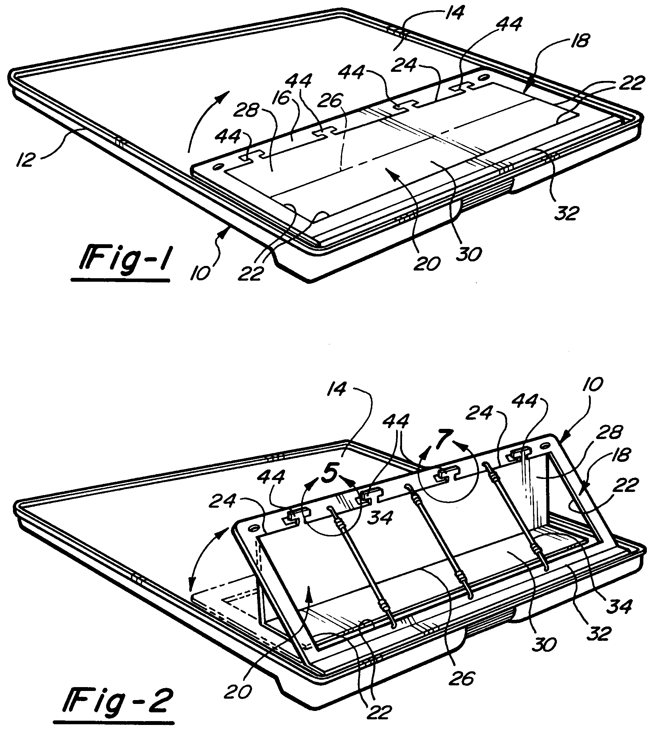

Referring first to Figures 1 and 2, there is shown a preferred embodiment of a cargo organizer 10 suitable for the cargo storage area of a vehicle. The organizer 10 can be used as a stand alone option in a trunk of a passenger vehicle or the rear cargo area of a utility vehicle or may be provided as part of a movable load floor 12 reciprocatingly mounted within the rear cargo area of a utility vehicle. During non-use, the organizer 10 is designed to lay flat as shown in Fig. 1 forming a planar load surface 14 for the vehicle. The organizer 10 can be quickly moved with a single hand to a raised position (Fig. 2) for retaining packages as will be subsequently described.

The preferred form of the organizer 10 comprises a single sheet of material, such as a plastic material, which is durable against wear yet can be integrally maintained through living or mechanical hinges to allow folding of the material. In the stored position (Fig. 1), the organizer forms a durable load floor 14 on which cargo can be placed. Upon folding up the organizer 10 (Fig. 2), a compartmentalized organizer is formed to prevent sliding and tipping of individual packages such as grocery bags. The organizer 10 includes an integral sheet 15 having a peripheral frame 18 and an inner panel 20 at least partially cut out of the frame 18. The inner panel 20 is detached from the frame 18 along three of its edges 22 to allow separation from the frame 18 yet remains connected to the frame 18 along the remaining edge 24 forming a living hinge between the frame 18 and the inner panel 20. The hinged connection can be formed by scoring or partially cutting through the sheet material or otherwise creating a hinged connection.

A longitudinal hinge 26 is also formed in the panel 20 allowing folding of the panel 20 along a center line. The hinge 26 is also formed by scoring or partially cutting the sheet material to maintain the integrity of the organizer 10. The folding inner panel 20 acts as a leg to prop up the frame 18 as best shown in Fig. 2 forming the organizer 10. Upon erection of the organizer 10, the inner panel 20 folds forming an upright wall 28 and a base wall 20 retaining the frame 18 at an angle extending from the top of the upright wall 28 to the load floor 14. Preferably, the frame 18 is hingedly connected along edge 32 to the load floor 14 or other structure of the vehicle.

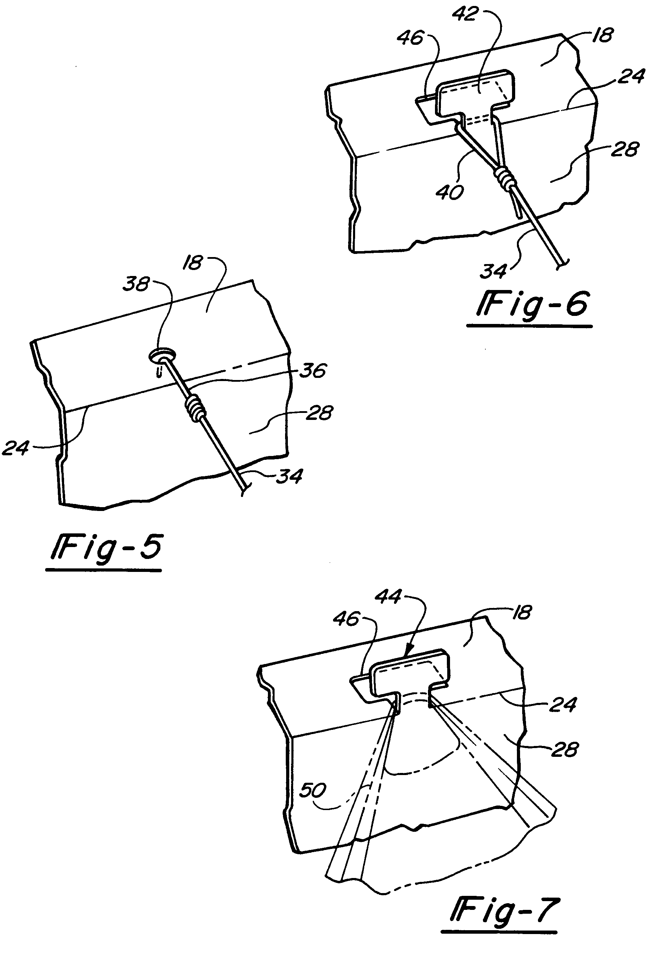

Whereas the erected frame 18 and the upright wall 28 of the inner body partially compartmentalize the organizer 10 to retain cargo, additional dividers may be provided to divide the organizer into smaller compartments. The organizer 10 of Fig. 2 is provided with simple cord dividers 34 extending between the upper and lower edges of the frame 18. In a preferred embodiment, the dividers 34 are bungee cords. Referring to Figs. 5 and 6, the divider cords 34 detachably connected to the frame 18 to permit variations in the size of the individual compartments of the organizer 10. In the embodiment of Figure 5, the divider cord 34 is provided with a hook 36 which can be detachably connected to an aperture 38 in the frame 18. In the embodiment of Fig. 6, the divider cord 34 includes looped ends 40 which can be detachably connected to a tab 42 formed in the organizer 10. Preferably, the tab 42 is an extension of the upright wall 28 of the inner panel 20. Accordingly, any number of detachable dividers 34 may be incorporated into the organizer 10 to compartmentalize the organizer 10.

The organizer 10 also includes means for retaining packages such as plastic grocery bags. As shown in Figure 7, formed in the upright wall 28 are a plurality of tabs 44. The tabs 44 are cut out of the sheet material forming an opening 46 corresponding to the shape of the tab 44 such that upon erection of the organizer 10 the tabs 44 extend upwardly above the frame 18. This is accomplished by forming the tabs 44 as an extension of the upright wall 28 and not extending the hinged connection 24 through the tabs 44. Upon collapse of the organizer, the tabs 44 will lie flat within the opening 46. Preferably, the tabs 44 are T-shaped allowing the handle 50 of the grocery bag to be hooked over the tabs 44. As a result, the flexible bags will be prevented from spilling their contents.

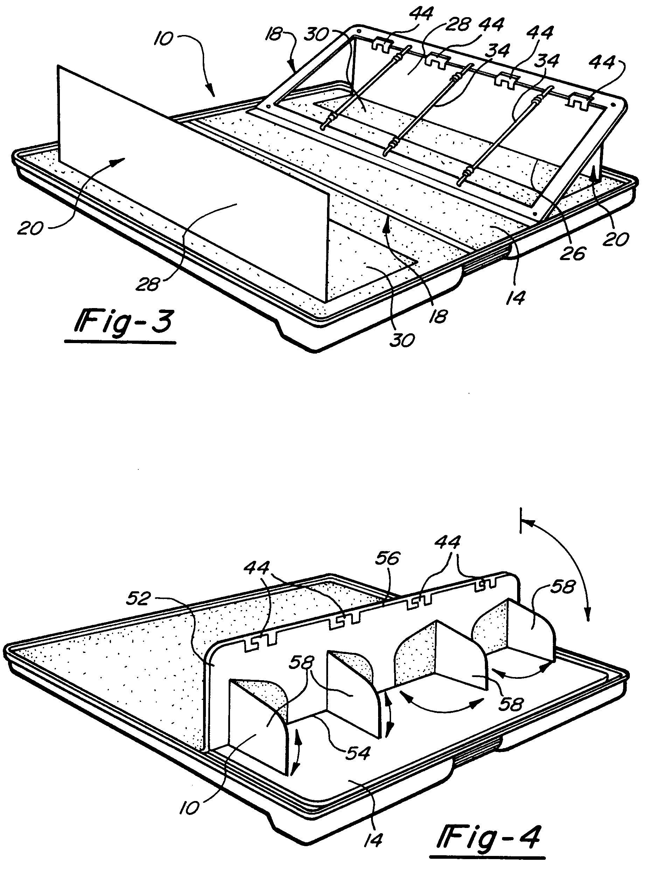

Figure 3 illustrates an alternative embodiment wherein a pair of organizers 10 are positioned in facing relationship on the load floor 14.

Figure 4 shows an organizer 10 which can be readily folded down to form a flat load floor. This embodiment of the organizer 10 includes a single panel 52 hingedly connected to the load floor 14 along a longitudinal edge 54. Cargo tabs 44 are formed along the upper edge 56 of the panel 52. In order to maintain the panel 52 upright, a plurality of pivotable dividers 58 are provided. The dividers are hingedly connected to the upright panel 52 maintaining the integral nature of the organizer 10. The dividers 58 form a right angle between the panel 52 and the load floor 14. The dividers 58 may be selectively used to vary the number and size of the compartments in the organizer 10. To collapse the organizer 10, the dividers 58 are simply folded against the panel 52 and the panel 52 is folded downwardly forming a planar load floor 14.

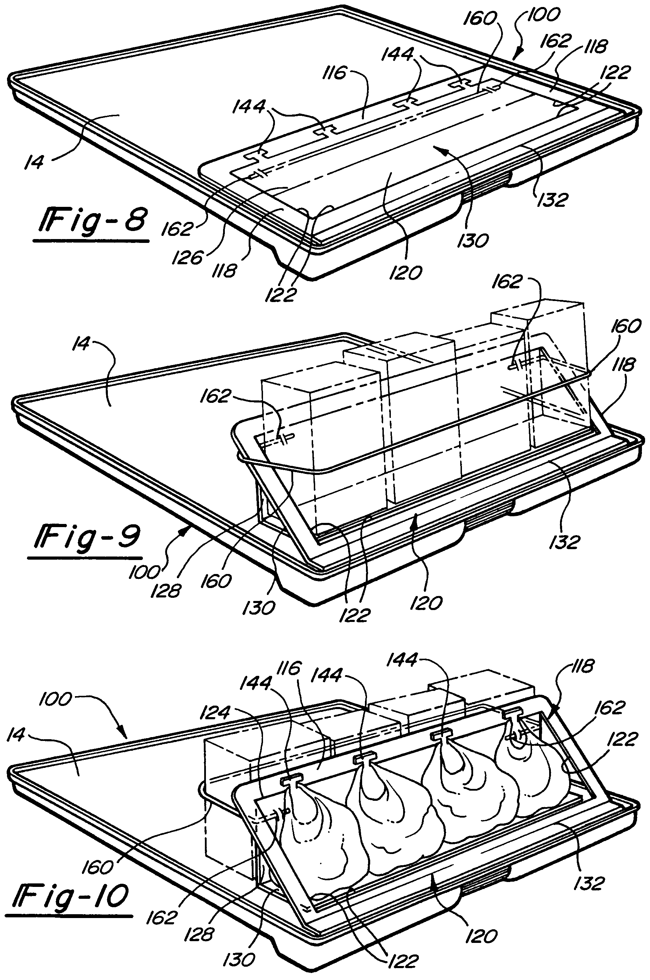

Another embodiment of the organizer 100 is shown in Figures 8 through 10. The organizer 100 includes the same single panel construction hingedly connected to the load floor along a longitudinal edge 154. cargo tabs 144 are formed along the upper edge 156 of the panel 152. Instead of the compartmentalizing dividers, the organizer 100 has a single compartment with frame 118. A single bungee cord 160 extends longitudinally along the organizer 100 and is preferably connected at its ends 162 to the upright wall 128. In the collapsed position, the bungee 160 lies flat (Fig. 8). The bungee 160 can be wrapped around cargo stored within the frame 118 (Fig. 9) or behind the upright wall 128 (Fig. 10). The latter configuration increases the storage capacity of the organizer.

Thus, the present invention provides a convenient means of organizing cargo within a vehicle. The organizer 10 can be quickly erected to create a compartmentalized cargo area to accommodate various sized packages. In addition, the organizer 10 can be collapsed creating a planar load floor for larger cargo or simply for appearances. The integral construction reduces manufacturing costs and creates the planar load floor upon collapse.

## Claims

1. A cargo container for a rear cargo compartment of a vehicle, said cargo compartment having a load floor (12), said vehicle cargo organizer comprising:
a substantially planar body (18, 20) hingedly mounted to the load floor of the cargo compartment, said body selectively foldable to form a compartmentalized organizer, said organizer stored substantially flush with the load floor forming a flat load surface (14) within the cargo compartment and selectively erectable to form said compartmentalized organizer;
said planar body including a peripheral frame (18) hingedly attached to the load floor along one edge (32) of said frame and an inner panel (20) hingedly connected within said frame along one common edge (24) therebetween, said inner panel forming a support leg upon erection of said frame such that said frame extends at an angle from said hinged edge of said inner panel spaced above the load floor downwardly to the load floor;
characterized by
said inner panel (20) folding into two sections upon erection of said organizer, said inner panel including an upper wall (28) and a base wall (30) hingedly connected along a fold line (26) parallel to said common hinged edge (24), said inner panel folding along said fold line upon erection of said organizer such that said upper wall forms a substantially vertical support and said base wall remains flush with said load floor (12).

2. The cargo organizer as defined in claim 1 and further comprising means for dividing said organizer into a plurality of separated compartments, said dividing means selectively engageable to vary the size and number of compartments in said organizer.

3. The cargo organizer as defined in claim 1 or 2 wherein said inner panel (20) is connected to said frame (18) by a living hinge extending along said common edge (24) thereby maintaining said inner panel integral with said frame.

4. The cargo organizer as defined in any one of the preceding claims and further comprising retaining means on said common edge (24) of said frame (18) and inner panel (20), said retaining means facilitating the connection of cargo to said organizer.

5. The cargo organizer as defined in claim 4 wherein said retaining means comprises tabs (44) extending from said inner panel (20) for connecting the cargo to said organizer.

6. The cargo organizer as defined in claim 2 wherein said dividing means includes at least one divider cord (34) extending between opposite edges of said peripheral frame (18).

7. The cargo organizer as defined in claim 2 wherein said dividing means includes at least one divided panel hingedly connected to said planar body (18, 20), said at least one divider panel foldable away from said planar body and engageable with the load floor.

## Patentansprüche

1. Frachtbehälter für ein rückwärtiges, einen Ladeboden (12) aufweisendes Frachtabteil eines Fahrzeugs, wobei der Fahrzeugfrachtorganisator versehen ist mit:
einem im wesentlichen ebenen Körper (18, 20), der gelenkig mit dem Ladeboden des Frachtabteils verbunden ist und der selektiv faltbar ist, um einen in Abteile unterteilten Organisator zu bilden, der im wesentlichen bündig mit dem Ladeboden aufbewahrt wird und eine flache Ladefläche (14) innerhalb des Frachtabteils bildet, und der selektiv aufrichtbar ist, um den in Abteile unterteilten Organisator zu bilden;
wobei der ebene Körper einen peripheren Rahmen (18), der gelenkig an dem Ladeboden entlang einem Rand (32) des Rahmens befestigt ist, und ein inneres Flächenbauteil (20) aufweist, das innerhalb des Rahmens entlang eines gemeinsamen Randes (24) zwischen diesen gelenkig verbunden ist und beim Aufrichten des Rahmens eine Stütze bildet, so daß der Rahmen von dem Gelenkrand des inneren Flächenbauteils aus unter einem Winkel in Abstand über dem Ladeboden nach unten zu dem Ladeboden hin verläuft;
dadurch gekennzeichnet, daß
das sich innere Flächenbauteil (20) beim Aufrichten des Organisators in zwei Bereiche faltet, und wobei das innere Flächenbauteil eine obere Wand (28) und eine damit entlang eines parallel zu dem gemeinsamen Gelenkrand verlaufenden Falzes (26) gelenkig verbundene Basis (30) aufweist, wobei sich das innere Flächenbauteil beim Aufrichten des Organisators entlang des Falzes so faltet, daß die obere Wand eine im wesentlichen vertikale Stütze bildet und die Basis bündig mit dem Ladeboden (12) verbleibt.

2. Frachtorganisator gemäß Anspruch 1, ferner versehen mit einer Anordnung zum Unterteilen des Organisators in eine Mehrzahl voneinander getrennter Abteile, wobei die Unterteilungsanordnung selektiv in Eingriff gebracht werden kann, um die Größe und Anzahl der Abteile in dem Organisator zu variieren.

3. Frachtorganisator gemäß Anspruch 1 oder 2, bei welchem das innere Flächenbauteil (20) mit dem Rahmen (18) über ein entlang dem gemeinsamen Rand (24) verlaufendes Falzscharnier verbunden ist, so daß das innere Flächenbauteil einteilig mit dem Rahmen verbleibt.

4. Frachtorganisator gemäß einem der vorhergehenden Ansprüche, ferner versehen mit einer Rückhalteanordnung an dem gemeinsamen Rand (24) des Rahmens (18) und des inneren Flächenbauteils (20), welche das Verbinden von Fracht mit dem Organisator erleichtert.

5. Frachtorganisator gemäß Anspruch 4, bei welchem die Rückhalteanordnung Ansätze (44) aufweist, die sich von dem inneren Flächenbauteil (20) aus erstrecken, um Fracht mit dem Organisator zu verbinden.

6. Frachtorganisator gemäß Anspruch 2, bei welchem die Unterteilungsanordnung mindestens ein Unterteilungsband (34) aufweist, das sich zwischen gegenüberliegenden Rändern des peripheren Rahmens (18) erstreckt.

7. Frachtorganisator gemäß Anspruch 2, bei welchem die Unterteilungsanordnung mindestens eine mit dem ebenen Körper (18, 20) gelenkig verbundene Unterteilungswand aufweist, die in einer Richtung weg von dem ebenen Körper faltbar ist und mit dem Ladeboden in Eingriff gebracht werden kann.

## Revendications

1. Récipient à marchandises pour un compartiment arrière à marchandises d'un véhicule, ledit compartiment à marchandises ayant un plancher de chargement (12), ledit dispositif d'aménagement des marchandises pour véhicule comprenant:
un corps essentiellement plan (18, 20) monté de façon articulée sur le plancher de chargement du compartiment à marchandises, ledit corps pouvant être déplié de façon sélective pour former un dispositif d'aménagement compartimenté, ledit dispositif étant rangé essentiellement à fleur du plancher de chargement, formant ainsi une surface plate (14) de chargement à l'intérieur du compartiment à marchandises, et pouvant être redressé de façon sélective pour former ledit dispositif d'aménagement compartimenté;
ledit corps plan incluant un cadre périphérique (18) relié de façon articulée au plancher de chargement le long d'un bord (32) dudit cadre, et un panneau intérieur (20) relié de façon articulée audit cadre, à l'intérieur de celui-ci, le long d'un bord commun (24) entre ces deux éléments, ledit panneau intérieur formant une jambe de support lorsque ledit cadre est redressé, de manière que ledit cadre s'étende à un angle à partir dudit bord charnière dudit panneau intérieur, au-dessus du plancher de chargement, vers le bas en direction du plancher de chargement;
caractérisé en ce que ledit panneau intérieur (20) se plie en deux parties lors du déploiement dudit dispositif d'aménagement, ledit panneau intérieur comprenant une paroi supérieure (28) et une paroi de base (30), reliées de façon articulée l'une à l'autre le long d'une ligne de pliage (26) parallèle audit bord charnière commun (24), ledit panneau intérieur se pliant le long de ladite ligne de pliage lors du déploiement dudit dispositif d'aménagement, de manière telle que ladite paroi supérieure forme un support essentiellement vertical, et que ladite paroi de base reste essentiellement à fleur dudit plancher de chargement (12).

2. Dispositif d'aménagement de marchandises selon la revendication 1, comprenant en outre des moyens pour diviser ledit dispositif d'aménagement en plusieurs compartiments séparés, lesdits moyens de division pouvant être engagés de façon sélective de sorte à modifier la taille et le nombre des compartiments dans ledit dispositif d'aménagement.

3. Dispositif d'aménagement de marchandises selon la revendication 1 ou 2, dans lequel ledit panneau intérieur (20) est relié audit cadre (18) au moyen d'une charnière mobile s'étendant le long dudit bord commun (24), maintenant ainsi ledit panneau intérieur intégré audit cadre.

4. Dispositif d'aménagement de marchandises selon l'une quelconque des revendications précédentes, et comprenant en outre des moyens de retenue aménagés sur ledit bord commun (24) dudit cadre (18) et dudit panneau intérieur (20), lesdits moyens de retenue facilitant la fixation des marchandises sur ledit dispositif d'aménagement.

5. Dispositif d'aménagement de marchandises selon la revendication 4, dans lequel lesdits moyens de retenue comprennent des languettes (44) s'étendant depuis ledit panneau intérieur (20) de sorte à permettre la fixation des marchandises audit dispositif d'aménagement.

6. Dispositif d'aménagement de marchandises selon la revendication 2, dans lequel lesdits moyens de division incluent au moins un cordon de division (34) s'étendant entre les bords opposés audit cadre périphérique (18).

7. Dispositif d'aménagement de marchandises selon la revendication 2, dans lequel lesdits moyens de division incluent au moins un panneau de division relié de façon articulée audit corps plan (18, 20), ledit au moins un panneau de division pouvant être déplié à partir dudit corps plan et pouvant être amené en engagement avec le plancher de chargement.
